# EUROPEAN PATENT SPECIFICATION

(11) **EP 4 492 551 B1**
(45) Date of publication and mention of the grant of the patent: **22.04.2026**
(21) Application number: 23931068.3
(22) Date of filing: 26.12.2023
(51) Int. Cl.: H01M 50/24, H01M 10/613, H01M 50/105, H01M 50/233, H01M 50/204, F16J 15/06

(54) **GASKET FOR RETARDING FLAME DEVELOPMENT DURING THERMAL RUNAWAY AND BATTERY PACK PROVIDED WITH SAME**
DICHTUNG ZUR VERZÖGERUNG DER FLAMMENENTWICKLUNG WÄHREND EINES THERMISCHEN DURCHGEHENS UND BATTERIEPACK DAMIT
JOINT D'ÉTANCHÉITÉ POUR RETARDER LE DÉVELOPPEMENT DES FLAMMES PENDANT UN EMBALLEMENT THERMIQUE ET BLOC-BATTERIE DOTÉ DE CELUI-CI

(30) Priority: 28.03.2023 KR 20230040474
(43) Date of publication of application: 15.01.2025
(73) Proprietor: LG Energy Solution, Ltd., Seoul 07335 (KR)
(72) Inventor: KIM, Haejin, Daejeon 34122 (KR); LEE, Jaesung, Daejeon 34122 (KR); HONG, Sein, Daejeon 34122 (KR)
(74) Representative: Plasseraud IP
(86) International application number: PCT/KR2023/021525
(87) International publication number: WO 2024/204960

(56) References cited:
- CN-U- 209 880 682
- CN-U- 211 980 723
- CN-U- 213 042 997
- CN-U- 213 752 872
- CN-U- 213 752 872
- CN-U- 215 496 950
- KR-A- 20220 100 465

## Description

### TECHNICAL FIELD

The present disclosure relates to a gasket and a battery pack provided with the same, and more particularly, to a gasket capable of retarding an external flame development during thermal runaway and a battery pack provided with the same.

### BACKGROUND

Unlike primary batteries which cannot be recharged, secondary batteries refer to batteries that can be charged and discharged, and are used not only in portable devices but also in electric vehicles (EVs) and hybrid electric vehicles (HEVs) that are driven by an electrical drive source.

Types of secondary batteries currently widely used include lithium ion batteries, lithium polymer batteries, nickel cadmium batteries, nickel hydrogen batteries, and nickel zinc batteries. The operating voltage of a unit secondary battery cell, that is, a unit battery cell, is approximately 2.5V to 4.6V. Therefore, when a higher output voltage is required, a battery pack is formed by connecting multiple battery cells in series. In addition, a battery pack may also be formed by connecting multiple battery cells in parallel depending on the charge/discharge capacity required for the battery pack. Accordingly, the number of battery cells included in the battery pack may be set in various ways depending on the required output voltage or charge/discharge capacity.

When forming a battery pack by connecting a plurality of battery cells in series/parallel, it is common to first configure a battery module comprising at least one battery cell, preferably a plurality of battery cells, and to form the battery pack by using at least one such battery module and adding other components. In this case, the battery module refers to a component in which multiple battery cells are connected in series or parallel, and the battery pack refers to a component in which multiple battery modules are connected in series or parallel to increase capacity and output.

Typically, a vehicle battery pack has a plurality of battery modules or battery module assemblies arranged on the same plane to maintain structural stability.

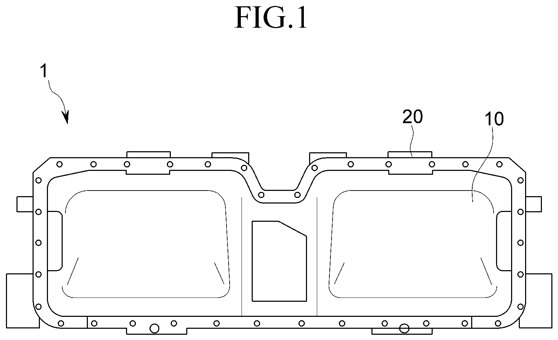

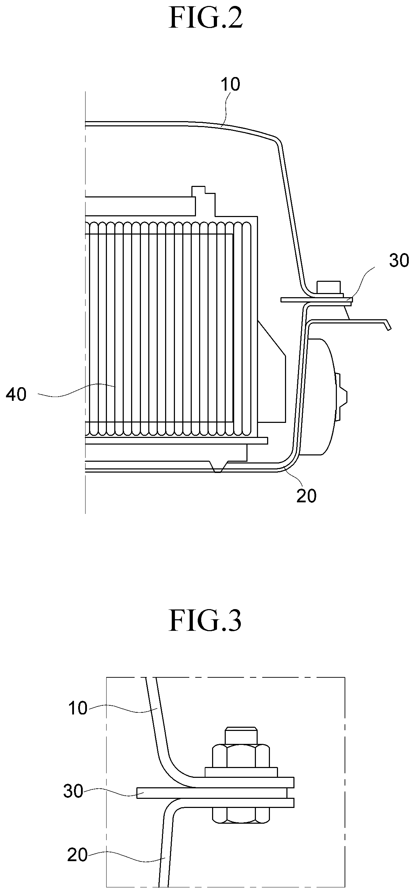

FIGS. 1 to 3 show a conventional battery pack 1. As shown, the battery pack 1 includes an upper housing 10, a lower housing 20, a gasket 30 between the upper housing 10 and the lower housing 20, and a battery module 40 disposed therein.

However, in such a battery pack 1, in the event of an overcharge or the like, high energy may flow instantaneously, and the chemical activation of the anode material is greatly increased due to the overcharge or short circuit, so the anode material may rapidly react with the electrolyte to generate a large amount of gas and thermal runaway. During such thermal runaway, the main gasket 30 may be damaged due to flame or short circuit, which may cause flame to escape from the battery pack 1.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section. As an example, CN 213752872 U describes a battery box with a sealing gasket and a fire-stop plate, according to the preamble of claim 1. As another example, CN 215496950 U describes a battery pack with a fireproofing member.

### SUMMARY

In order to solve the above problems, the present disclosure provides a gasket capable of retarding flame development to the outside of a battery pack during thermal runaway and a battery pack provided with the same.

A gasket for retarding flame development, in accordance with one embodiment of the present disclosure, is disposed for sealing between an upper housing and a lower housing and is defined in the appended independent claim 1.

Further, the gasket body may be formed along edges of the upper housing and the lower housing.

Further, the inner coupling portion may be formed integrally with the heatproof portion.

Further, the heatproof portion may protrude upward beyond an upper surface of the gasket body.

Further, the heatproof portion may protrude downward beyond a lower surface of the gasket body.

Further, an upper part of the heatproof portion may be in contact with the upper housing, and a lower part of the heatproof portion may be in contact with the lower housing.

Further, the upper and lower parts of the heatproof portion may have curved portions bent toward the upper housing and the lower housing, respectively.

Further, the heatproof portion may include: an upper cover portion that covers an upper surface of the gasket body at an upper side of the heatproof portion; and a lower cover portion that covers the lower surface of the gasket body at a lower side of the heatproof portion.

Further, the heatproof member may contain a heat-resistant material, and may contain mica.

A battery pack capable of retarding flame development during thermal runway, in accordance with one embodiment of the present disclosure, is defined in the appended claim 9.

A battery pack capable of retarding flame development during thermal runway, in accordance with another non-claimed embodiment, comprises: at least one battery module; a case including an upper housing and a lower housing coupled to the upper housing, and housing the battery module; and a gasket disposed between an upper housing and a lower housing, wherein the gasket comprises: a gasket body that is disposed between the upper housing and the lower housing; and a heatproof member surrounding the gasket body.

Further, the heatproof member may cover all surfaces of the gasket body.

The gasket and the battery pack according to the present disclosure may prevent damage to the gasket during thermal runaway and retard the flame development to the outside of the battery pack.

### BRIEF DESCRIPTION OF THE DRAWINGS

FIG. 1 is a diagram showing a conventional battery pack.
FIG. 2 is a diagram showing a cross-section of one side of the battery pack in FIG. 1.
FIG. 3 is a detailed view of a joined portion of an upper housing and a lower housing in FIG. 2.
FIG. 4 is a diagram showing a cross-section of one side of a battery pack in a first embodiment of the present disclosure.
FIG. 5 is a detailed view of part A in FIG. 4.
FIG. 6 is a partial detailed view of a battery pack in a second embodiment of the present disclosure.
FIG. 7 is a partial detailed view of a battery pack in a third embodiment of the present disclosure.
FIG. 8 is a partial detailed view of a battery pack in a fourth embodiment of the present disclosure.

### DETAILED DESCRIPTION

The advantages and features of the present disclosure and methods for achieving them will become apparent by referring to the embodiments described in detail below along with the accompanying drawings. However, the present disclosure is not limited to the embodiments disclosed below and can be implemented in various different forms. The present embodiments are provided merely to make the disclosure of the present disclosure complete and to fully inform a person of ordinary skill in the art to which the present disclosure pertains of the scope of the present disclosure, and the present disclosure may be defined by the scope of the claims. It should be noted that, in some embodiments, well-known process steps, well-known device structures, and well-known techniques may not be specifically described to avoid ambiguous interpretation of the present disclosure. Like reference numerals may refer to like components throughout the specification.

In the drawings, in order to clearly represent multiple layers and areas, the thickness thereof may be shown to scale. Throughout the specification, like parts may be given the same reference numerals. When it is described that a part such as a layer, membrane, region, plate, etc., is "on" another part, this includes not only a case where the part is "directly on" the another part, but also a case where there is other part between them. Conversely, when it is described that a part is "directly on" another part, it means that there is no other part between them. In addition, when it is described that a part such as a layer, membrane, region, plate, etc., is "under" another part, this includes not only a case where the part is "directly under" the another part, but also a case where there is other part between them. Conversely, when it is described that a part is "directly under" another part, it means that there is no other part between them.

Hereinafter, a gasket 300 for retarding flame development during thermal runaway and a battery pack 1000 provided with the same, according to a preferred embodiment of the present disclosure, will be described in detail with reference to the accompanying drawings.

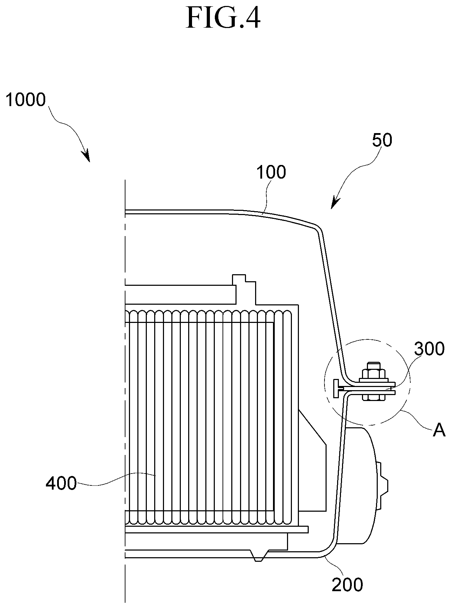

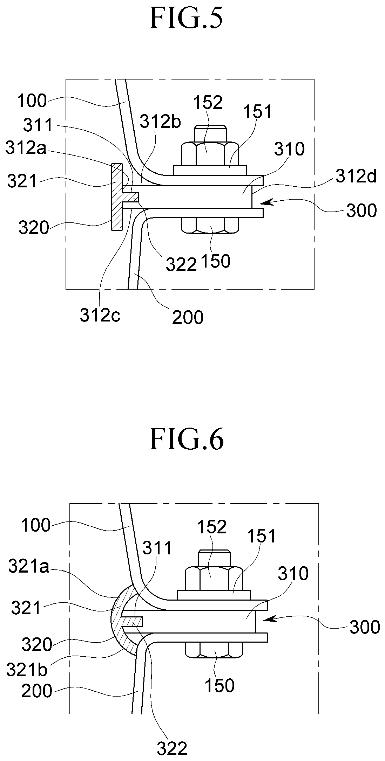

FIG. 4 is a diagram showing a cross-section of one side of the battery pack in a first embodiment of the present disclosure, and FIG. 5 is a detailed view of part A in FIG. 4.

The gasket 300 according to the first embodiment of the present disclosure is a gasket 300 disposed for sealing between an upper housing 100 and a lower housing 200. The gasket 300 includes a gasket body 310 disposed between the upper housing 100 and the lower housing 200; and a heatproof member 320 disposed on the inner side of the gasket body 310.

In addition, the battery pack 1000 for retarding flame development during thermal runaway according to the first embodiment of the present disclosure includes at least one battery module 400, a case 50 housing the battery module 400, and the gasket 300. The case 50 includes the upper housing 100 and the lower housing 200.

Hereinafter, the gasket 300 according to the present disclosure will be described as an example applied to the battery pack 1000.

The battery module 400 accommodated in the battery pack 1000 includes a plurality of battery cells (not shown), and each battery cell may be, for example, a pouch-type battery cell.

As an example, the battery module 400 may include a plurality of battery cells stacked on top of each other, and each battery cell may be provided with an electrode lead at each of front and rear ends, with a positive lead at the front end and a negative lead at the rear end. The plurality of battery cells in the battery module 400 may be stacked to be electrically connected to each other.

The battery cell is not limited to the pouch-type battery cell and may be other types of battery cells, such as a prismatic battery cell, and the plurality of battery cells may be accommodated in the case of the battery module 400.

The case 50 is for housing a plurality of battery modules 400, and the case 50 may include an upper housing 100 and a lower housing 200, and may further include a gasket 300 provided between the upper and lower housings 100 and 200.

The plurality of battery modules 400 may be accommodated in the lower housing 200, and the upper housing 100 is coupled to an upper side of the lower housing 200 to form an internal space for accommodating the battery modules 400 inside the case 50.

The gasket 300 disposed between the upper housing 100 and the lower housing 200 is for sealing between the upper housing 100 and the lower housing 200, and the gasket 300 may be disposed across the entire portion where the upper and lower housings 100 and 200 are joined and may be in the form of a closed loop on a plane.

The gasket 300 is disposed between the upper housing 100 and the lower housing 200 to seal between the upper housing 100 and the lower housing 200. In the present disclosure, the gasket 300 includes a gasket body 310 and a heatproof member 320 disposed on the inner side of the gasket body 310.

The gasket body 310 is disposed between the upper housing 100 and the lower housing 200 for sealing, and may be disposed across the entire portion where the upper and lower housings 100 and 200 are connected.

Accordingly, the gasket body 310 may be formed along the edges of the upper and lower housings 100 and 200. When the portion where the upper and lower housings 100 and 200 are connected is formed across the entire edge of the case 50, the gasket body 310 may have a ring shape or a closed loop shape on a plane.

A groove 311 into which an inner coupling portion 322 of the heatproof member 320 is coupled may be formed on an inner surface (inner peripheral surface) 312a of the gasket body 310 located on the inner side of the case 50. The groove 311 may be formed on all or part of the inner peripheral surface of the gasket main body 310 depending on the formation of the inner coupling portion 322 (reference numeral 312d refers to an outer surface (outer peripheral surface) of the gasket main body 310).

The gasket body 310 may be made of a rubber, a synthetic resin such as urethane, a metal, or other materials.

The heatproof member 320 is for preventing or retarding damage to the gasket 300 (or the gasket body 310) during thermal explosion. The heatproof member 320 is disposed on the inner side of the gasket body 310 in the case 50, and includes the inner coupling portion 322 coupled to the gasket body 310 and a heatproof portion 321. The heatproof member 320 may be made of a heat-resistant material or may contain a heat-resistant material, and may be made of, e.g., mica, a composite material including mica, or other materials.

The heatproof portion 321 is disposed on the inside of the gasket body 310 to prevent damage to the gasket body 310 during thermal runaway, and is formed along the inner peripheral surface of the gasket body 310 while contacting the inner surface 312a of the gasket body 310.

The heatproof portion 321 may be formed along the entire inner peripheral surface of the gasket body 310 inside the case 50, and an up-down length (width) of the heatproof portion 321 may be formed to be equal to or greater than a thickness of the gasket body 310. Accordingly, the heatproof portion 321 may be formed to cover the entire thickness of the gasket body 310.

The heatproof portion 321 may extend in the thickness direction of the gasket body 310, and, as shown in FIG. 5, may protrude upward beyond an upper surface 312b of the gasket body 310 that is equal to or more than the thickness of the gasket body 310 and may protrude downward beyond a lower surface 312c of the gasket body 310 that is equal to or more than the thickness of the gasket body 310. Accordingly, the width of the heatproof portion 321 may be three times or more than the thickness of the gasket body 310.

The heatproof portion 321 having the above-described configuration may be disposed on the inner side of the gasket body 310 to prevent damage to the gasket body 310 during thermal runaway.

The material of the heatproof portion 321 may be the same as the material of the heatproof member 320 described above.

The inner coupling portion 322 is disposed on a side surface of the heatproof portion 321 to couple the heatproof member 320 to the gasket body 310, and the inner coupling portion 322 is formed to protrude from the side surface of the heatproof portion 321 to contact the inner surface 312a (inner peripheral surface) of the gasket body 310 and be inserted and coupled to the groove 311 of the gasket body 310.

The inner coupling portion 322 may be made of the same material as that of the heatproof portion 321 or that of the heatproof member 320 described above, and may be formed integrally with the heatproof portion 321.

The heatproof member 320 may be manufactured, for example, by insert injection molding. In one example, the heatproof member 320 may be manufactured together with the gasket body 310 by insert injection molding, and thus the assembly process is omitted and the bonding strength may be improved.

The gasket 300 having the above-described configuration is disposed between the upper housing 100 and the lower housing 200, and is coupled with the upper and lower housings 100 and 200 by a bolt 150, a washer 151, and a nut 152.

In the present disclosure, as described above, the heatproof member 320 is disposed on the inner peripheral surface of the gasket body 310 to prevent or retard damage to the gasket body 310 during thermal runaway and to retard the flame to develop outside of the battery pack 1000.

Next, a gasket 300 for retarding flame development during thermal runaway and a battery pack 1000 provided with the same, according to a second embodiment of the present disclosure, will be described. FIG. 6 is a detailed view of the portion where the upper and lower housings 100 and 200 are joined in the second embodiment of the present disclosure.

The difference between the second embodiment and the first embodiment is that upper and lower parts of the heatproof portion 321 of the heatproof member 320 of the gasket 300 are curved. That is, in the present embodiment, the upper and lower parts of the heatproof portion 321 may have curved portions 321a and 321b, respectively. In addition, the upper and lower parts of the heatproof portion 321 may be formed to contact the upper housing 100 and the lower housing 200, respectively.

As shown in FIG. 6, in the present embodiment, the curved portion 321a located at the upper side of the heatproof portion 321 is formed to be curved toward the upper housing 100, and the curved portion 321b located at the lower side of the heatproof portion 321 is formed to curved toward the lower housing 200.

The curved portion 321a at the upper side of the heatproof portion 321 has an arc shape so that an end of the curved portion 321a can contact the upper housing 100, and the curved portion 321b at the lower side of the heatproof portion 321 has an arc shape so that an end of the curved portion 321b can contact the lower housing 200.

In the second embodiment, as described above, the upper and lower parts of the heatproof portion 321 are curved like a bow, which may make it possible to effectively block heat from being applied to the gasket body 310 and to retard the flame to develop outside of the battery pack 1000 during thermal runaway.

The other configurations and effects may be the same as those of the first embodiment, and detailed description thereof will be omitted herein.

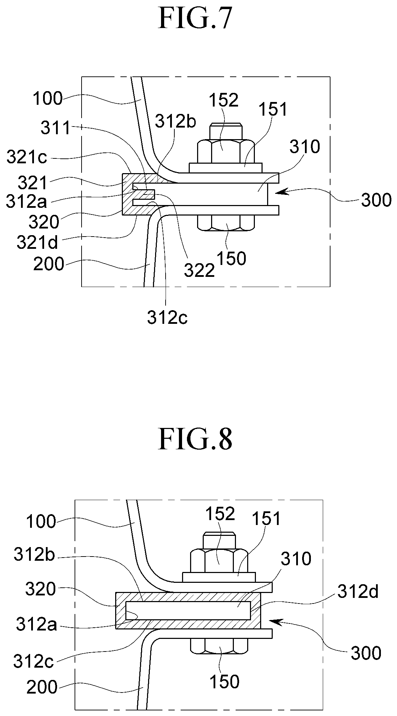

Next, a gasket 300 for retarding flame development during thermal runaway and a battery pack 1000 provided with the same, according to a third embodiment of the present disclosure, will be described. FIG. 7 is a detailed view of the portion where the upper and lower housings 100 and 200 are joined in the third embodiment of the present disclosure.

The difference between the third embodiment and the previous embodiments is that the upper and lower parts of the heatproof portion 321 of the heatproof member 320 of the gasket 300 are formed to cover the gasket body 310 in the case 50. That is, in this embodiment, the upper and lower parts of the heatproof portion 321 may have an upper cover portion 321c and a lower cover portion 321d, respectively.

As shown in FIG. 7, in the present embodiment, the upper cover portion 321c located at the upper side of the heatproof portion 321 is formed to cover the upper surface 312b of the gasket body 310 in the case 50, and the lower cover portion 321d located at the lower side of the heatproof portion 321 is formed to cover the lower surface 312c of the gasket body 310 in the case 50. Further, an end of the upper cover portion 321c may extend to the upper housing 100 to contact an inner surface of the upper housing 100, and the lower cover portion 321d may extend to the lower housing 200 to contact an inner surface of the lower housing 200.

In the third embodiment, as described above, the upper and lower parts of the heatproof portion 321 have the upper cover portion 321c and the lower cover portion 321d, respectively, and may effectively block heat and/or flame from being applied to the gasket body 310 during thermal runaway.

Meanwhile, in FIG. 7, the inner coupling portion 322 is shown inside the heatproof portion 321, but the heatproof portion 321 may be formed without the inner coupling portion 322. For example, the heatproof portion 321 may be fixed to gasket body 310 using adhesive or may be manufactured integrally together.

The other configurations and effects may be the same as those of the previous embodiments, and detailed description thereof will be omitted herein.

Next, a gasket 300 for retarding flame development during thermal runaway and a battery pack 1000 provided with the same, according to the fourth, non-claimed embodiment, will be described. FIG. 8 is a detailed view of the portion where the upper and lower housings 100 and 200 are joined in the fourth embodiment of the present disclosure.

The difference between the fourth embodiment and the previous embodiments is that the heatproof member 320 of the gasket 300 is formed to cover the entire surface of the gasket body 310. That is, in the present embodiment, the heatproof member 320 is formed to surround the entire gasket body 310.

As shown in FIG. 8, in the present embodiment, the heatproof member 320 may be formed to surround all of the inner surface 312a of the gasket main body 310 located inside the case 50, the upper surface 312b of the gasket main body 310, the lower surface 312c of the gasket body 310, and the outer surface 312d of the gasket body 310 located outside the case 50.

In the fourth embodiment, as described above, the heatproof member 320 is formed to surround the entire gasket body 310, and may effectively block heat and/or flame from being applied to the gasket body 310 during thermal runaway.

In the present embodiment, the heatproof member 320 may be formed without the inner coupling portion 322 described above.

The other configurations and effects may be the same as those of the previous embodiments, and detailed description thereof will be omitted herein.

Although the present disclosure has been described with reference to the preferred embodiments as described above, the present disclosure is not limited to the above-described embodiments and various changes and modifications may be made by those skilled in the art to which the present disclosure pertains without departing from the scope of the appended claims.

### (Industrial Applicability)

The present disclosure may provide a gasket and a battery pack capable of preventing damage to the gasket and retard flame to develop outside of the battery pack during thermal runaway.

## Claims

1. A gasket (300) for retarding flame development, which is configured to be disposed between an upper housing (100) and a lower housing (200), the gasket (300) comprising:
a gasket body (310) that is configured to be disposed between the upper housing (100) and the lower housing (200); and
a heatproof member (320) that is disposed on an inner side of the gasket body (310) and including a heatproof portion (321) disposed on an inner peripheral surface of the gasket body (310);
**characterized in that** the heatproof member (320) includes an inner coupling portion (322), on one side of the heatproof portion (321), which is coupled to the gasket body (310), wherein the gasket body (310) includes a groove (311), on the inner peripheral surface, into which the inner coupling portion (322) is configured to be inserted.

2. The gasket (300) of claim 1, wherein the inner coupling portion (322) is formed integrally with the heatproof portion (321).

3. The gasket (300) of claim 1, wherein the heatproof portion (321) protrudes upward beyond an upper surface (312b) of the gasket body (310).

4. The gasket (300) of claim 1, wherein the heatproof portion (321) protrudes downward beyond a lower surface (312c) of the gasket body (310).

5. The gasket (300) of claim 1, wherein an upper part of the heatproof portion (321) is configured to contact with the upper housing (100), and
a lower part of the heatproof portion (321) is configured to contact with the lower housing (200).

6. The gasket (300) of claim 1, wherein upper and lower parts of the heatproof portion (321) have curved portions (321a, 321b), which are configured to be bent toward the upper housing (100) and the lower housing (200), respectively.

7. The gasket (300) of claim 1, wherein the heatproof portion (321) includes:
an upper cover portion (321c) that covers an upper surface (312b) of the gasket body (310) at an upper side of the heatproof portion (321); and
a lower cover portion (321d) that covers the lower surface (312c) of the gasket body (310) at a lower side of the heatproof portion (321).

8. The gasket (300) of claim 1, wherein the heatproof member (320) contains a heat-resistant material.

9. A battery pack (1000) capable of retarding flame development during thermal runway, comprising:
at least one battery module (400);
a case (50 )including an upper housing (100) and a lower housing (200) coupled to the upper housing (100), and housing the battery module (400); and
a gasket (300) according to claim 1, that is disposed between the upper housing (100) and the lower housing (200).

## Patentansprüche

1. Dichtung (300) zum Verzögern einer Flammenausbreitung, welche derart eingerichtet ist, dass sie zwischen einem oberen Gehäuse (100) und einem unteren Gehäuse (200) angeordnet ist, wobei die Dichtung (300) umfasst:
einen Dichtungskörper (310), welcher derart eingerichtet ist, dass er zwischen dem oberen Gehäuse (100) und dem unteren Gehäuse (200) angeordnet ist; und
ein hitzefestes Element (320), welches an einer inneren Seite des Dichtungskörpers (310) angeordnet ist und welches einen hitzefesten Abschnitt (321) umfasst, welcher an einer Innenumfangsfläche des Dichtungskörpers (310) angeordnet ist;
**dadurch gekennzeichnet, dass** das hitzefeste Element (320) an einer Seite des hitzefesten Abschnitts (321) einen inneren Kopplungsabschnitt (322) umfasst, welcher mit dem Dichtungskörper (310) gekoppelt ist, wobei der Dichtungskörper (310) an der Innenumfangsfläche eine Nut (311) umfasst, in welche der innere Kopplungsabschnitt (322) eingerichtet ist, eingeführt zu sein.

2. Dichtung (300) nach Anspruch 1, wobei der innere Kopplungsabschnitt (322) integral mit dem hitzefesten Abschnitt (321) gebildet ist.

3. Dichtung (300) nach Anspruch 1, wobei der hitzefeste Abschnitt (321) über eine obere Fläche (312b) des Dichtungskörpers (310) hinaus nach oben vorsteht.

4. Dichtung (300) nach Anspruch 1, wobei der hitzefeste Abschnitt (321) über eine untere Fläche (312c) des Dichtungskörpers (310) hinaus nach unten vorsteht.

5. Dichtung (300) nach Anspruch 1, wobei ein oberer Teil des hitzefesten Abschnitts (321) derart eingerichtet ist, dass er das obere Gehäuse (100) kontaktiert, und
ein unterer Teil des hitzefesten Abschnitts (321) derart eingerichtet ist, dass er das untere Gehäuse (200) kontaktiert

6. Dichtung (300) nach Anspruch 1, wobei ein oberer und ein unterer Teil des hitzefesten Abschnitts (321) gekrümmte Abschnitte (321a, 321b) aufweisen, welche derart eingerichtet sind, dass sie in Richtung des oberen Gehäuses (100) bzw. des unteren Gehäuses (200) gebogen sind.

7. Dichtung (300) nach Anspruch 1, wobei der hitzefeste Abschnitt (321) umfasst:
einen oberen Abdeckungsabschnitt (321c), welcher eine obere Fläche (312b) des Dichtungskörpers (310) an einer oberen Seite des hitzefesten Abschnitts (321) abdeckt; und
einen unteren Abdeckungsabschnitt (321d), welcher die untere Fläche (312c) des Dichtungskörpers (310) an einer unteren Seite des hitzefesten Abschnitts (321) abdeckt.

8. Dichtung (300) nach Anspruch 1, wobei das hitzefeste Element (320) ein hitzebeständiges Material umfasst.

9. Batteriepack (1000), welcher dazu in der Lage ist, eine Flammenausbreitung während eines thermischen Durchgehens zu verzögern, umfassend:
wenigstens ein Batteriemodul (400);
ein Gehäuse (50), welches ein oberes Gehäuse (100) und ein unteres Gehäuse (200) umfasst, das mit dem oberen Gehäuse (100) gekoppelt ist, und welches das Batteriemodul (400) aufnimmt; und
eine Dichtung (300) nach Anspruch 1, welche zwischen dem oberen Gehäuse (100) und dem unteren Gehäuse (200) angeordnet ist.

## Revendications

1. Joint (300) pour retarder un développement de flammes, qui est configuré pour être disposé entre un logement supérieur (100) et un logement inférieur (200), le joint (300) comprenant :
un corps de joint (310) qui est configuré pour être disposé entre le logement supérieur (100) et le logement inférieur (200) ; et
un organe calorifuge (320) qui est disposé sur un côté intérieur du corps de joint (310) et comportant une portion calorifuge (321) disposée sur une surface périphérique intérieure du corps de joint (310) ;
**caractérisé en ce que** l'organe calorifuge (320) comporte une partie de couplage intérieure (322), sur un côté de la portion calorifuge (321), qui est couplée au corps de joint (310), dans lequel le corps de joint (310) comporte une rainure (311), sur la surface périphérique intérieure, dans laquelle la partie de couplage intérieure (322) est configurée pour être insérée.

2. Joint (300) selon la revendication 1, dans lequel la partie de couplage intérieure (322) est formée d'un seul tenant avec la portion calorifuge (321).

3. Joint (300) selon la revendication 1, dans lequel la portion calorifuge (321) fait saillie vers le haut au-delà d'une surface supérieure (312b) du corps de joint (310).

4. Joint (300) selon la revendication 1, dans lequel la portion calorifuge (321) fait saillie vers le bas au-delà d'une surface inférieure (312c) du corps de joint (310).

5. Joint (300) selon la revendication 1, dans lequel une partie supérieure de la portion calorifuge (321) est configurée pour entrer en contact avec le logement supérieur (100), et
une partie inférieure de la portion calorifuge (321) est configurée pour entrer en contact avec le logement inférieur (200).

6. Joint (300) selon la revendication 1, dans lequel les parties supérieure et inférieure de la portion calorifuge (321) ont des portions incurvées (321a, 321b), qui sont configurées pour être courbées vers le logement supérieur (100) et le logement inférieur (200), respectivement.

7. Joint (300) selon la revendication 1, dans lequel la portion calorifuge (321) comporte :
une portion de recouvrement supérieure (321c) qui recouvre une surface supérieure (312b) du corps de joint (310) au niveau d'un côté supérieur de la portion calorifuge (321) ; et
une portion de recouvrement inférieure (321d) qui recouvre la surface inférieure (312c) du corps de joint (310) au niveau d'un côté inférieur de la portion calorifuge (321).

8. Joint (300) selon la revendication 1, dans lequel l'organe calorifuge (320) contient un matériau thermorésistant.

9. Bloc-batterie (1000) capable de retarder un développement de flammes pendant un emballement thermique, comprenant :
au moins un module de batterie (400) ;
un boîtier (50) comportant un logement supérieur (100) et un logement inférieur (200) couplé au logement supérieur (100), et logeant le module de batterie (400) ; et
un joint (300) selon la revendication 1, qui est disposé entre le logement supérieur (100) et le logement inférieur (200).
